# EUROPÄISCHE PATENTANMELDUNG

(11) **EP 3 961 087 A1**
(43) Veröffentlichungstag der Anmeldung: **02.03.2022**
(21) Anmeldenummer: 21401032.4
(22) Anmeldetag: 20.08.2021
(51) Int. Cl.: F21S 41/24, F21S 41/16, G02B 27/48

(54) **VORRICHTUNG ZUR ERZEUGUNG EINES LICHTSTRAHLS, INSBESONDERE SCHEINWERFER**

(30) Priorität: 31.08.2020 DE 102020122717; 17.12.2020 DE 102020133946
(71) Anmelder: Clausen, Heidi, 33649 Bielefeld (DE)
(72) Erfinder: Clausen, Rüdiger, 33649 Bielefeld (DE)
(74) Vertreter: Schober, Mirko

(57) **Zusammenfassung**

Die Vorrichtung zur Erzeugung eines Lichtstrahls (7"), insbesondere Scheinwerfer, weist eine Lichtquelle (5), die Laserlicht abstrahlt, und eine Linsenanordnung (2) auf, durch welche das von der Lichtquelle (5) kommende Licht (751 - 754) geführt ist. Die Vorrichtung (1) weist einen Lichtleiter (8) auf, in dessen eines Ende (8.1) das aus der Lichtquelle (5) kommende Licht (751 - 754) eingekoppelt und aus dessen anderem Ende (8.2) das in den Lichtleiter (5) eingekoppelte aus der Lichtquelle (5) stammende Licht in die Linsenanordnung (2) weitergeführt ist.

## Beschreibung

Die Erfindung betrifft eine Vorrichtung zur Erzeugung eines Lichtstrahls nach dem Oberbegriff des Anspruchs 1.

Entsprechende Vorrichtungen werden in einem breiten Feld von Anwendungsbereichen eingesetzt, wenn ein Lichtstrahl über eine größere Entfernung noch einen sichtbaren Lichtfleck hinterlassen soll. Konventionelle Lichtquellen weisen eine geringe Strahlungsdichte und eine hohe Divergenz auf. Über längere Entfernungen wird das Licht auch bei Einsatz von entsprechenden Fokussierungsoptiken diffus, sodass ein Objekt in größerer Entfernung nicht mehr ausreichend hell angestrahlt werden kann.

Beispielsweise im Bereich der Autoscheinwerfer, z. B. beim BMW i8, oder auch der Suchscheinwerfer ist bekannt, anstelle einer konventionellen Lichtquelle eine Laserlichtquelle zu verwenden. Dazu wird beispielsweise eine im blauen Spektralbereich, 450 nm, abstrahlende Hochleistungsdiode auf eine teildurchlässige Phosphorschicht gestrahlt, dadurch entsteht hinter der Phosphorschicht homogen verteiltes weißes Licht. Dies ermöglicht, auch in größerer Entfernung noch sehr viel Licht aus kleindimensionierten Scheinwerfern herauszuholen.

Allerdings hat die verwendete Technologie auch Nachteile. So entsteht beispielsweise am Rand des so erzeugten Lichtstrahls beim auf das auszuleuchtende Objekt auftreffenden Lichtfleck ein bunter Randbereich, der für einzelne Anwendungen als störend empfunden wird. Dieses Problem entsteht, wenn die hinter der Phosphorschicht entstehenden Lichtstrahlen unterschiedlicher Wellenlängen nur unzureichend miteinander vermischt sind, sodass im Ergebnis nicht in allen Richtungen wirklich weißes Licht abgestrahlt wird. Des Weiteren weist die bekannte Technologie auch Nachteile dahingehend auf, dass die Lichtleistung und infolgedessen eben die Helligkeit des auf dem Objekt in größerer Entfernung erzeugten Lichtflecks bei der bekannten Technologie stark begrenzt ist. Verbesserungen erfordern in diesem Punkt bei Anwendung der bekannten Technologie einerseits die Erhöhung der Leistung der verwendeten Laserlichtquelle und andererseits auch sehr große Linsen.

Der Erfindung liegt die Aufgabe zugrunde, eine eingangs genannte Vorrichtung zur Erzeugung eines Lichtstrahls dahingehend weiterzuentwickeln, dass die erwähnten Nachteile nach Möglichkeit nicht auftreten oder wenigstens verringert werden.

Gelöst wird diese Aufgabe durch eine Vorrichtung zur Erzeugung eines Lichtstrahls mit den Merkmalen des Anspruchs 1.

Vorteilhafte Ausführungsformen sind Gegenstand der Unteransprüche.

Eine erfindungsgemäße Vorrichtung zur Erzeugung eines Lichtstrahls, die sich insbesondere als Scheinwerfer einsetzen lässt, weist eine Lichtquelle, die Laserlicht abstrahlt, und eine Linsenanordnung auf, durch welche das von der Lichtquelle kommende Licht geführt ist. Erfindungsgemäß wird bei der Vorrichtung ein Lichtleiter eingesetzt, in dessen eines Ende das aus der Lichtquelle kommende Licht eingekoppelt und aus dessen anderem Ende das in den Lichtleiter eingekoppelte und aus der Lichtquelle stammende Licht in die Linsenanordnung weitergeführt ist.

Die vorliegende Erfindung sieht in einer Ausführungsform vor, das aus der Laserlichtquelle stammende Licht zu mischen und über einen Lichtleiter in die entsprechende Linsenanordnung einzubringen, über welche das Licht dann abgestrahlt wird. Die Verwendung eines Lichtleiters an dieser Stelle hat eine ganze Reihe von Vorteilen. Da der Lichtleiter in gewissen Grenzen gebogen werden kann, lässt sich in einem Gehäuse, auch in einem kompakten Gehäuse, ein Lichtleiter unterbringen, dessen Lichtweg ohne weiteres einige Meter betragen kann. Dieser Lichtweg steht beim Einkoppeln von Mischlicht, beispielsweise RGB-Licht, das nach einer bevorzugten Ausführungsform aus Laserlicht der Farben rot, grün und blau zusammen gemischt wird -insbesondere können hier für Laserdioden verwendet werden - ein verhältnismäßig großer Weg zur Verfügung, in welchem sich eine ausreichende Mischung der einzelnen Lichtkomponenten vollziehen kann. Durch die Totalreflexion im Lichtleiter werden Lichtstrahlen in allen Richtungen abgelenkt und können an dem dem Einkopplungsende gegenüberliegenden Ende ausgekoppelt und der Linsenanordnung zugeführt werden. Auf diese Weise wird sichergestellt, dass das den Lichtleiter verlassende Mischlicht tatsächlich bei der Verwendung von roten, grünen und blauen Anteilen dazu führt, dass tatsächlich reines weißes Licht in die Linsenanordnung eintritt. Der geschilderte Effekt eines bunten Randes tritt dann nicht mehr auf.

Bevorzugt ist dazu vorgesehen, dass die Lichtquelle eine Mehrzahl Laserlichtquellen aufweist, welche jeweils für das menschliche Auge sichtbares Laserlicht unterschiedlicher Wellenlängen abstrahlen, wobei dieses Licht als Mischlicht durch den Lichtleiter geführt und am anderem Ende des Lichtleiters das aus der Mehrzahl Laserlichtquellen erzeugte Mischlicht in die Linsenanordnung weitergeführt ist.

Wie oben bereits angedeutet, wird hierbei bevorzugt, dass das Mischlicht weißes Licht ist oder umfasst. Natürlich können je nach Anwendungsfall auch andere Lichtfarben erzeugt werden.

Nach einer bevorzugten Ausführungsform ist die Lichtquelle als RGB-Laserlichtquelle mit einer ersten Laserlichtquelle, die rotes Licht abstrahlt, einer zweiten Laserlichtquelle, die grünes Licht abstrahlt, und einer dritten Laserlichtquelle, die blaues Licht abstrahlt, ausgebildet. Solche Lichtquellen sind z. B. bei Veranstaltungsbeleuchtungen oder Projektoren bekannt und daher kommerziell erhältlich.

Wie oben bereits erwähnt, kann die Länge des Lichtleiters für das Mischlicht eine entscheidende Rolle spielen. Insbesondere bei der Erzeugung von qualitativ hochwertigem weißen Licht ist dies entscheidend. Bevorzugt beträgt die Länge des Lichtleiters wenigstens 1 m, bevorzugt wenigstens 1,5 m, insbesondere wenigstens 2 m. Gerade wenn es darum geht, eine längere Mischstrecke für das Licht zu erhalten, kann vorgesehen sein, dass der Lichtleiter in einer Mehrzahl Windungen, insbesondere aufgewickelt oder aufgerollt, vorhanden ist. Dies erlaubt nicht nur eine längere Mischstrecke, sondern auch eine sehr kompakte Bauweise der erfindungsgemäßen Vorrichtung.

Die Lichtquelle muss - je nach Anwendungsfall - nicht zwingend nur oder überhaupt sichtbares, d. h. für das menschliche Auge sichtbares, Licht abstrahlen. Es kann auch vorgesehen sein, dass die Lichtquelle alternativ oder ergänzend wenigstens eine Laserlichtquelle umfasst, die für das menschliche Auge nicht sichtbares Licht, insbesondere Infrarotlicht abstrahlt, das in den Lichtleiter eingekoppelt ist.

Was den Lichtleiter betrifft, so ist dieser im einfachsten Fall, insbesondere zwischen einer Einkopplungsvorrichtung und dem Linsensystem, in gerader Linie geführt. Dabei kommt es bisweilen vor, dass das in den Lichtleiter eintretende Licht nicht hundertprozentig gemischt wird. Dies äußert sich beim Austreten aus dem Lichtleiter in einem nicht gleichmäßigen bzw. nicht homogenen Lichtfleck. Zwar wird in Lichtleitern das darin propagierte Licht durch Totalreflexion reflektiert, allerdings kann das in der Praxis dazu führen, dass eine homogene Durchmischung trotz allem nicht vorliegt. Nach einer bevorzugten Ausführungsform der vorliegenden Erfindung ist deshalb vorgesehen, dass die Vorrichtung einen Antrieb, insbesondere einen Elektromotor, umfasst, der dazu ausgelegt ist, den Lichtleiter zwischen seinen Enden in Schwingungen zu versetzen. Hierdurch wird erreicht, dass der Lichtleiter gleichmäßig ausgeleuchtet wird und somit der resultierende Lichtfleck an der Austrittsseite homogen und gleichmäßig erscheint.

Dabei kann insbesondere vorgesehen sein, dass der Lichtleiter zwischen seinen Enden an einem Träger angeordnet, insbesondere darauf aufgewickelt, ist, wobei der Träger mit dem Antrieb gekoppelt ist. Als Träger kann beispielsweise eine Ronde oder Spule dienen, auf die der Lichtleiter aufgewickelt ist. Diese Spule kann insbesondere Rillen für den Lichtleiter aufweisen. In einer besonderen Ausführungsform ist im Zentrum dieser Spule oder Ronde ein Elektromotor angeordnet, der eine Schwungmasse auf der Motorwelle trägt, die als Unwucht an der Motorwelle angreift. Auf diese Weise wird die Spule oder Ronde senkrecht zur Welle in Vibrationen versetzt und kann so dafür sorgen, dass der Lichtleiter zwischen seinen beiden Enden schwingt. Bevorzugt ist die Spule oder Ronde über Kopplungselemente wie zum Beispiel Schwingmetalle an einer Grundplatte gelagert, sodass diese Kopplungselemente die Schwingungen des Trägers ausgleichen können.

Wie oben erwähnt, kann die Erfindung sehr kompakt gebaut werden, da ein Lichtleiter verwendet wird. So kann vorgesehen sein, dass die erfindungsgemäße Vorrichtung ein Gehäuse, insbesondere tragbares Gehäuse, umfasst, in welchem die Lichtquelle, die Linsenanordnung und der Lichtleiter untergebracht sind.

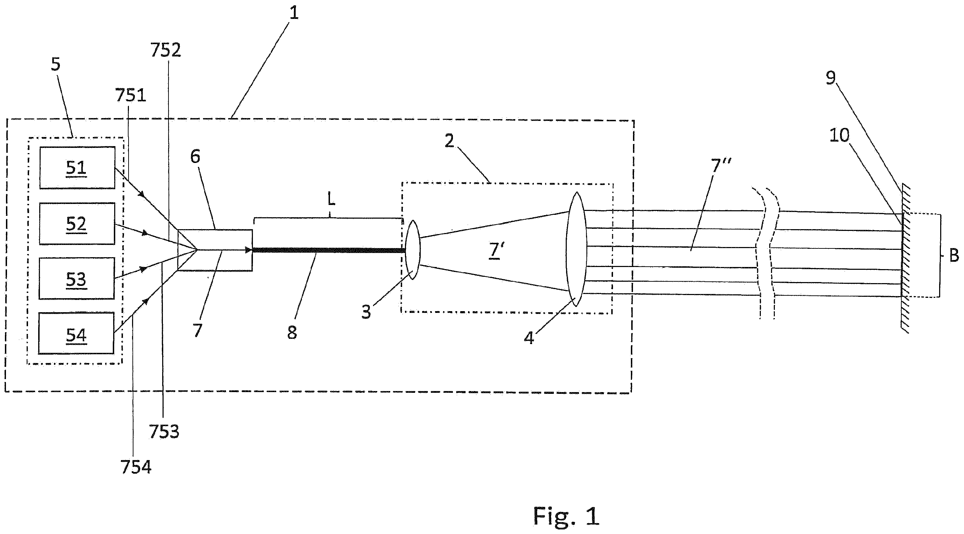

Die Erfindung wird nachfolgend anhand der Figuren 1 bis 3 näher erläutert.
Figur 1 zeigt ein schematisch dargestelltes Ausführungsbeispiel der erfindungsgemäßen Vorrichtung.
Figur 2 zeigt ein zweites Ausführungsbeispiel der erfindungsgemäßen Vorrichtung.
Figur 3 zeigt eine perspektivische Detailansicht eines auf einem Träger angeordneten Lichtleiters.

Die erfindungsgemäße Vorrichtung 1 weist als Grundkomponenten eine Linsenanordnung 2, die im gezeigten Beispiel zwei Sammellinsen 3 und 4 umfasst, aber auch andere Linsen aufweisen kann, sowie eine Laserlichtquelle 5 auf. Die aus der Laserlichtquelle 5 kommende Laserstrahlung 7 wird mithilfe einer nicht näher bezeichneten, aber im Prinzip bekannten Einkopplungsvorrichtung 6 in einen Lichtleiter 8 an dessen einem Ende eingekoppelt und durch den Lichtleiter 8 hindurch in die Linsenanordnung 2 geführt. Die aus dem Lichtleiter 8 austretende Laserstrahlung 7 wird in der Linsenanordnung 2 aufgeweitet, wie durch 7' angedeutet. Das Strahlprofil des aufgeweiteten, die Linsenanordnung 2 verlassenden Lichtstrahls 7" ist im Prinzip ein Abbild der Austrittsseite des Lichtleiters 8. Je nach verwendeter Linsenoptik 2 und Divergenz des Lichtstrahls 7" entsteht in einer bestimmten Entfernung von der Linsenanordnung 2 auf einer Projektionsfläche 9 ein Fleck 10 der Breite B. Der Lichtfleck 10 ist also lediglich eine Abbildung der Lichtaustrittsfläche an dem der Linsenanordnung 2 zugewandten Ende des Lichtleiters 8. Die Linsenanordnung 2 kann Verstellmöglichkeiten aufweisen, um das Profil des Strahls 7" oder dessen Divergenz und somit letztlich die Breite B des Flecks 10 in einem bestimmten Abstand einzustellen.

In einer bestimmten Ausführungsform der vorliegenden Erfindung weist die Lichtquelle eine Mehrzahl Laserlichtquellen 51 bis 54 auf. Bevorzugt sind drei Lichtquellen 51 bis 53 vorgesehen, deren Teillichtstrahlen 751 bis 753 miteinander gemischt werden und so weißes Licht ergeben. Bevorzugt sind die Teillichtstrahlen Lichtstrahlen der Farben rot, grün und blau. Insoweit handelt es sich in diesem Ausführungsbeispiel um einen sogenannten RGB-Laser. Die miteinander gemischten Teillichtstrahlen, die sich im Strahl 7, der folglich Mischlicht enthält, vereinigen, gelangen durch den Lichtleiter 8 und im Weiteren durch diesen hindurch in die Linsenanordnung 2. Die Länge L des Lichtleiters - gemessen von dem Eintrittsende zum Austrittsende - ist dabei so bemessen, dass durch zahlreiche interne Reflexionen im Lichtleiter die einzelnen Lichtkomponenten so miteinander vermischt werden, dass am Austrittsende ein weißer Lichtstrahl entsteht.

Bevorzugt ist dazu die Länge L in der Größenordnung von mindestens einem oder zwei Metern vorgesehen. Um die Bauweise der gesamten Anordnung 1 möglichst kompakt zu halten, kann der Lichtleiter 8 aufgewickelt werden. Die Wegstrecke, die in der Zeichnung zwischen dem Bauteil 6 und der Linsenanordnung 2 abgebildet ist, braucht also nicht ein geradliniger Weg sein, sondern kann beispielsweise spiralförmig oder anderweitig verlaufen. So kann die erfindungsgemäße Vorrichtung zum Beispiel in Gestalt eines tragbaren Scheinwerfers sehr platzsparend untergebracht werden.

Die Laserlichtquellen 51 bis 53 wurden im Zusammenhang mit Licht aus dem für das menschliche Auge sichtbaren Spektrum beschrieben. Alternativ oder ergänzend kann auch eine Laserlichtquelle 54 vorgesehen sein, die Licht 754 im für das menschliche Auge nicht sichtbaren Spektrum abstrahlt, bevorzugt im Infrarotbereich, insbesondere im Nah-Infrarotbereich, z. B. bei etwa 980 nm. Alle Laserlichtquellen können als Laserdioden ausgebildet sein.

Die vorliegende Erfindung beseitigt durch den Einsatz des Lichtleiters 8 das Problem farbiger Ränder am Lichtfleck 10. Zudem lässt sich der an der Austrittsseite des Lichtleiters 8 entstehende Lichtfleck 10 durch die Linsenanordnung 2 mit verhältnismäßig geringer Divergenz und hoher Lichtintensität auf eine entfernte Projektionsfläche 9 projizieren.

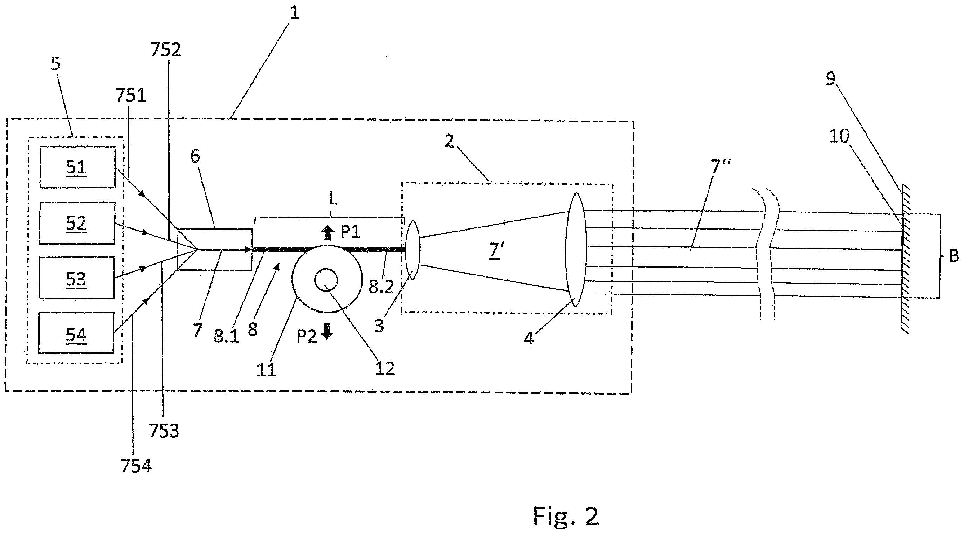

Die in Figur 2 dargestellte zweite Ausführungsform unterscheidet sich von der ersten Ausführungsform im gezeigten Beispiel lediglich dadurch, dass der Lichtleiter 8 etwas anders geführt bzw. gelagert ist. Zwischen dem ersten Ende 8.1 und dem zweiten Ende 8.2 des Lichtleiters 8 ist der Lichtleiter auf einen Träger 11 aufgewickelt (eine einzige Wicklung genügt bereits), der mit einem Antrieb 12 gekoppelt ist. Dieser Antrieb 12, bei dem es sich bevorzugt um einen Elektromotor handelt, ist ein Schwingungsantrieb, der bei Betätigung den Träger 11 in Schwingungen versetzt, insbesondere solche senkrecht zu einer Welle eines Elektromotors, wie dies durch die Pfeile P1 und P2 angedeutet ist. Versetzt man den Träger 11 - oder allgemeiner den Lichtleiter 8 - in Schwingungen, so resultiert dies in einer Homogenisierung des am Ende 8.2 des Lichtleiters 8 austretenden bzw. hinter dem Linsensystem projizierten Lichtflecks 10.

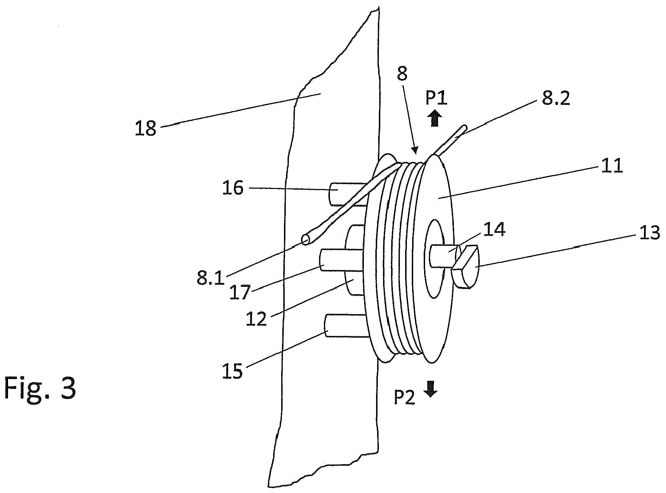

Eine mögliche Konstruktion des den Lichtleiter 8 aufnehmenden Trägers 11 ist in Figur 3 dargestellt. In dem dargestellten Beispiel ist der Träger 11 als Spule oder Ronde ausgebildet, ein anderer Trägerkörper ist aber ebenso denkbar, insbesondere müssen die Wicklungen natürlich nicht auf konzentrischen Achsen liegen oder eine kreisförmige Wicklungsform haben. Der Träger wird innerhalb der erfindungsgemäßen Vorrichtung auf einer Grundplatte oder einem anderen Grundkörper 18 montiert, wobei dazu bevorzugt Schwingmetalle oder andere in gewisser Hinsicht flexible Kopplungselemente 15 bis 17 verwendet werden können, die am Grundkörper 18 einerseits und an Träger 11 andererseits angebracht sind. Diese Kopplungselemente 15 bis 17 kompensieren die Schwingungen, bzw. entkoppeln die Schwingungen des Trägers 11 vom Rest der Vorrichtung. Die Schwingungen des Trägers 11 werden durch den Antrieb 12 hervorgerufen. Dieser ist im gezeigten Beispiel ein Elektromotor, der im Zentrum des Trägers 11 mit diesem gekoppelt ist und eine Antriebswelle 14 aufweist, an welcher eine als Unwucht ausgebildete Schwungmasse angeordnet ist. Auf diese Weise wird der Träger 11 beim Betrieb des Antriebs 12, also bei Drehung der Welle 14 um ihre Drehachse, radial zur Drehachse ausgelenkt, sodass sich der komplette Träger 11 radial zur Welle 13 in Schwingungen versetzt. Der Einfachheit halber sind diese Schwingungen durch die Pfeile P1 und P2 angedeutet.

## Patentansprüche

1. Vorrichtung (1) zur Erzeugung eines Lichtstrahls (7"), insbesondere Scheinwerfer, mit
einer Lichtquelle (5), die Laserlicht abstrahlt,
einer Linsenanordnung (2), durch welche das von der Lichtquelle (5) kommende Licht (751 - 754) geführt ist, **dadurch gekennzeichnet,**
**dass** die Vorrichtung (1) einen Lichtleiter (8) aufweist, in dessen eines Ende (8.1) das aus der Lichtquelle (5) kommende Licht (751 - 754) eingekoppelt und aus dessen anderem Ende (8.2) das in den Lichtleiter (5) eingekoppelte aus der Lichtquelle (5) stammende Licht (7) in die Linsenanordnung (2) weitergeführt ist.

2. Vorrichtung (1) nach Anspruch 1,
**dadurch gekennzeichnet,**
**dass** die Lichtquelle (5) eine Mehrzahl Laserlichtquellen (51 - 53) aufweist, welche jeweils für das menschliche Auge sichtbares Laserlicht (751 - 753) unterschiedlicher Wellenlängen abstrahlen, wobei dieses Licht als Mischlicht (7) durch den Lichtleiter (8) geführt und am anderem Ende des Lichtleiters (8) das aus der Mehrzahl Laserlichtquellen (51 - 53) erzeugte Mischlicht (7) in die Linsenanordnung (2) weitergeführt ist.

3. Vorrichtung (1) nach Anspruch 2,
**dadurch gekennzeichnet,**
**dass** das Mischlicht (7) weißes Licht ist oder umfasst.

4. Vorrichtung (1) nach Anspruch 2 oder 3,
**dadurch gekennzeichnet,**
**dass** die Lichtquelle (5) als RGB-Laserlichtquelle mit einer ersten Laserlichtquelle (51), die rotes Licht (751) ab-trahlt, einer zweiten Laserlichtquelle (52), die grünes Licht (752) abstrahlt, und einer dritten Laserlichtquelle (53), die blaues Licht (753) abstrahlt, ausgebildet ist.

5. Vorrichtung (1) nach einem der vorigen Ansprüche,
**dadurch gekennzeichnet,**
**dass** die Länge (L) des Lichtleiters (8) wenigstens 1 m, bevorzugt wenigstens 1,5 m, insbesondere wenigstens 2 m beträgt.

6. Vorrichtung (1) nach einem der vorigen Ansprüche,
**dadurch gekennzeichnet,**
**dass** der Lichtleiter (8) in einer Mehrzahl Windungen, insbesondere aufgewickelt oder aufgerollt, vorhanden ist.

7. Vorrichtung (1) nach einem der vorigen Ansprüche,
**dadurch gekennzeichnet,**
**dass** die Lichtquelle (5) wenigstens eine Laserlichtquelle (54) umfasst, die für das menschliche Auge nicht sichtbares Licht (754), insbesondere Infrarotlicht abstrahlt, das in den Lichtleiter (8) eingekoppelt ist.

8. Vorrichtung (1) nach einem der vorigen Ansprüche,
**dadurch gekennzeichnet,**
**dass** sie ein Gehäuse, insbesondere tragbares Gehäuse, umfasst, in welchem die Lichtquelle (5), die Linsenanordnung (2) und der Lichtleiter (8) untergebracht sind.

9. Vorrichtung (1) nach einem der vorigen Ansprüche,
**dadurch gekennzeichnet,**
**dass** die Vorrichtung einen Antrieb (12), insbesondere einen Elektromotor, umfasst, der dazu ausgelegt ist, den Lichtleiter (8) zwischen seinen Enden (8.1, 8.2) in Schwingungen zu versetzen.

10. Vorrichtung nach Anspruch 9,
**dadurch gekennzeichnet,**
**dass** der Lichtleiter (8) zwischen seinen Enden (8.1, 8.2) an einem Träger (11) angeordnet, insbesondere darauf aufgewickelt, ist, wobei der Träger (11) mit dem Antrieb gekoppelt ist.
